# EUROPÄISCHE PATENTSCHRIFT

(11) **EP 1 017 745 B1**
(45) Veröffentlichungstag und Bekanntmachung des Hinweises auf die Patenterteilung: **05.12.2001**
(21) Anmeldenummer: 98951463.3
(22) Anmeldetag: 24.09.1998
(51) Int. Cl.: C09C 1/30, C09C 3/08, C09C 3/12, C09C 1/00, C09C 1/56, B01F 17/00, B01D 19/04, E21B 43/22

(54) **AN IHRER OBERFLÄCHE ANISOTROP VERTEILTE ÜBERWIEGEND HYDROPHILE UND ÜBERWIEGEND HYDROPHOBE DOMÄNEN AUFWEISENDE AMPHIPHILE TEILCHEN ODER MOLEKÜLE**
AMPHIPHILIC PARTICLES OR MOLECULES WITH PREDOMINANTLY HYDROPHILIC AND PREDOMINANTLY HYDROPHOBIC DOMAINS DISTRIBUTED ANISOTROPICALLY ON THEIR SURFACE
PARTICULES OU MOLECULES AMPHIPHILES PRESENTANT DES DOMAINES PRINCIPALEMENT HYDROPHILES ET PRINCIPALEMENT HYDROPHOBES A DISTRIBUTION ANISOTROPE SUR LEUR SURFACE

(30) Priorität: 27.09.1997 DE 19742761
(43) Veröffentlichungstag der Anmeldung: 12.07.2000
(73) Patentinhaber: Rossmy, Gerd, 45721 Haltern (DE)
(72) Erfinder: ROSSMY, Gerd, D-45721 Haltern (DE); GIMMNICH, Peter, D-45259 Essen (DE); GRÜNING, Burghard, D-45134 Essen (DE); SCHATOR, Helmut, D-45144 Essen (DE); VENZMER, Joachim, D-45239 Essen (DE)
(74) Vertreter: Jönsson, Hans-Peter, Dr.Dipl.-Chem.
(86) Internationale Anmeldenummer: EP9806086
(87) Internationale Veröffentlichungsnummer: WO9916834

(56) Entgegenhaltungen:
- WO-A-89/08621
- WO-A-95/06518
- US-A- 3 549 396
- US-A- 4 844 980

## Beschreibung

An ihrer Oberfläche anisotrop verteilte überwiegend hydrophile und überwiegend hydrophobe Domänen aufweisende amphiphile Teilchen oder Moleküle

Die Erfindung betrifft in Wasser im wesentlichen unlösliche, an ihrer Oberfläche anisotrop verteilte überwiegend hydrophile und überwiegend hydrophobe Domänen aufweisende amphiphile Teilchen oder Moleküle einer Teilchengröße im Bereich von 1 nm bis 100 *µ*m, Verfahren zur Herstellung dieser Teilchen oder Moleküle sowie die gezielte Verwendung der Teilchen oder Moleküle.

Das hydrophile oder hydrophobe Verhalten eines Festkörpers wird im wesentlichen durch die an seiner Oberfläche befindlichen Gruppen bestimmt. So sind z.B. Teilchen oder Moleküle, welche an der Oberfläche Hydroxylgruppen aufweisen, im Regelfall hydrophil. Ein solches Verhalten zeigt beispielsweise feinteilige, durch Fällung oder pyrolytisch gewonnene Kieselsäure. Befinden sich an der Oberfläche des Teilchens oder Moleküls aber beispielsweise Alkylsilylgruppen oder Kohlenwasserstoffgruppen, wie Alkylgruppen, insbesondere längerkettige Alkylgruppen, weisen die Teilchen hydrophobe Eigenschaften auf .

Es ist nun seit langem bekannt, daß man den hydrophilen oder hydrophoben Charakter anorganischer oder organischer Teilchen oder Moleküle beeinflussen kann. Dies kann durch Adsorption von Substanzen an der Oberfläche eines Teilchens oder Moleküls, insbesondere aber durch chemische Reaktionen mit reaktiven Gruppen erfolgen, welche sich an der Oberfläche des Teilchens oder Moleküls befinden. Zu diesem Stand der Technik gibt es eine umfangreiche Literatur, insbesondere für die Ausrüstung von Glasoberflächen mit Alkylsilylverbindungen unter dem Stichwort "Silanhaftmittel".

So ist z B. in der DE-OS 23 13 073 ein Verfahren zur chemischen Modifizierung der Oberflächen anorganischer, Hydroxylgruppen enthaltender Festkörper mit dem Kennzeichen beschrieben, daß an diese Oberflächen Alkylketten chemisch gebunden werden, die reaktive Heteroatome tragen.

Es ist einleuchtend, daß durch eine derartige Modifizierung der Oberfläche die Eignung solcher modifizierter Festkörper als stationäre Phase in der Chromatographie wesentlich beeinflußt werden kann, da das physikalische und chemische Verhalten des modifizierten Festkörpers gegenüber der mobilen Phase wesentlich durch die Eigenschaften seiner Oberfläche bestimmt wird. Durch die Art der Modifizierungsreaktion und im Hinblick auf die beabsichtigte Verwendung ist davon auszugehen, daß die gesamte Oberfläche der Teilchen an der Modifizierungsreaktion teilnimmt.Wird das Modifizierungsmittel in einem Unterschuß verwendet, so daß nicht alle reaktiven Gruppen, die sich an der Oberfläche der Teilchen befinden, modifiziert werden können, ist anzunehmen, daß die Verteilung der modifizierten Gruppen auf der Oberfläche nach statistischen Gesetzen erfolgt.

Gegenstand der DE-OS 21 07 082 ist ein oberflächenbehandeltes, pulverisiertes Siliciumdioxid mit einer Oberfläche von mindestens 10 m²/g, welches dadurch gekennzeichnet ist, daß es einen Hydrophobizitätsgrad, gemessen durch den Methanoltitrationstest, von 5 bis 35 aufweist. Der Methanoltitrationstest, dessen Ergebnis auch als Methanolzahl bezeichnet wird, gibt eine häufig verwendete bestimmte Größe zur Ermittlung des Grades der Hydrophobie an. Die Ausführung des Testes kann in der Weise erfolgen, daß man 0,2 g des zu prüfenden Pulvers in 50 ml Wasser, das sich in einem konischen 250-ml-Kolben befindet, einbringt. Das Pulver wird, wenn es eine hydrophobe Oberfläche aufweist, durch das Wasser nicht benetzt und schwimmt auf der Oberfläche des Wassers. Nun wird aus einer Bürette langsam Methanol zugegeben, bis das gesamte zu prüfende Pulver benetzt ist. Der Endpunkt markiert den Punkt des Zusatzes von Methanol, bei dem praktisch das gesamte Pulver in der Flüssigkeit suspendiert ist. Die Mechanolzahl ist dann der Prozentsatz Methanol im Flüssigkeitsgemisch aus Methanol und Wasser bei Erreichen des Endpunktes.

In der vorgenannten DE-OS 21 07 082 erfolgt die Hydrophobierung des Siliciumdioxidpulvers dadurch, daß man die Oberfläche mit einem Silan behandelt, welches sowohl in bezug auf die OH-Gruppen der Kieselsäure reaktive Gruppen als auch hydrophobe Gruppen enthält. Durch die Reaktion der an der Oberfläche des Siliciumdioxids befindlichen Hydroxylgruppen mit den reaktiven Gruppen des Silans werden die Teilchen dergestalt modifiziert, so daß sich auf der Außenseite die hydrophoben Gruppen des Silans ausrichten. Beispiel eines solchen reaktiven Silans ist Methyltriethoxysilan. Auch in dieser Offenlegungsschrift wird davon gesprochen, daß die Verteilung solcher hydrophilen Gruppen willkürlich erfolgt, d.h., daß die Belegung der Oberfläche nach statistischen Gesetzen verläuft, so daß die Wahrscheinlichkeit, auf der Oberfläche eines modifizierten Teilchens eine hydrophile bzw.- hydrophobe Gruppe anzutreffen, in Abhängigkeit von der Konzentration dieser Gruppen überall gleich ist.

In der DE-OS 31 32 370 ist ein Verfahren zur tertiären Erdölförderung mittels Tensid-Fluten beschrieben, bei dem der tensidhaltigen, wäßrigen Flüssigkeit eine wirksame Menge eines oberflächenmodifizierten Siliciumdioxids zugesetzt wird.

Allen diesen modifizierten Teilchen des Standes der Technik ist gemeinsam, daß die Hydrophilie oder Hydrophobie der Oberfläche gezielt beeinflußt worden ist, um den Teilchen bestimmte, erwünschte anwendungstechnische Eigenschaften zu vermitteln. Diese anwendungstechnischen Eigenschaften beruhen insbesondere auf der besseren Verträglichkeit und Benetzbarkeit der Teilchen mit dem bzw. durch das Medium, in dem sich die Teilchen befinden. Die aus diesem Stand der Technik bekannten, in ihren Oberflächeneigenschaften modifizierten Festkörper weisen die hydrophoben oder hydrophilen Gruppen, die sich in der Teilchenoberfläche befinden, in gleichmäßiger, statistischer, d. h. isotroper Verteilung auf. Es gelingt somit nur, ein hydrophiles Teilchen mehr oder weniger ausgeprägt zu hydrophobieren oder umgekehrt. Dies zeigt sich in der Verteilung der Teilchen in zwei miteinander nicht mischbaren Flüssigkeiten; Überschichtet man Wasser als polare Flüssigkeit mit Hexan als Beispiel einer unpolaren Flüssigkeit und gibt man pyrogene Kieselsäure mit unbehandelter Oberfläche dazu, verteilt sich die unbehandelte pyrogene Kieselsäure aufgrund der Anwesenheit von Hydroxylgruppen an ihrer Oberfläche fast ausschließlich in der Wasserphase. Hydrophobiert man die Kieselsäure nach einem der obengenannten Verfahren, so daß praktisch alle Hydroxylgruppen modifiziert und gegebenenfalls verbleibende Hydroxylgruppen sterisch so abgeschirmt sind, daß ihr Beitrag zu den Oberflächeneigenschaften vernachlässigbar ist, verteilt sich eine solche hydrophobierte Kieselsäure praktisch ausschließlich in der Hexan-Phase. Hydrophobiert man jedoch pyrogene Kieselsäure nur teilweise und in unterschiedlichem Ausmaß, wobei der Grad der Hydrophobie z.B. durch die Methanolzahl bestimmt werden kann, erhält man Verteilungen zwischen beiden Phasen, die mit dem Grad der Hydrophobierung korrelieren.

Die EP 0 156 270 A2 betrifft durch hydrophile und hydrophobe Gruppen modifizierte Teilchen einer Teilchengröße < 100 µm, wobei die hydrophilen und hydrophoben Gruppen auf der Oberfläche der modifizierten Teilchen anisotrop verteilt sind, sowie Verfahren zur Herstellung solcher Teilchen und ihre Verwendung als grenzflächenaktive Produkte, insbesondere zum Stabilisieren oder Destabilisieren von Emulsionen, Schäumen sowie zur tertiären Erdölförderung. Eine Ausführungsform betrifft Teilchen, bei denen Teilmengen von hydrophob modifizierten Teilchen und Teilmengen von hydrophil modifizierten Teilchen chemisch miteinander verknüpft sind.

Aus der FR 9406899 (EP 0 686 391 A1) ist bekannt, daß Polyalkylsilsesquioxane, wie beispielsweise Tospearl^{(*)} 103, 105, 108, (Toshiba) eine Wasser-in-Öl-Emulsion stabilisieren. Die Oberfläche dieser Teilchen weist hydrophobe Eigenschaften auf, wobei die Teilchen an der Oberfläche sitzende Alkylketten bis zu 4 C-Atomen aufweisen. Die Oberfläche dieser Polyalkylsilsesquioxane wird zum einen durch die hydrophoben Alkylsilylgruppen und durch einige hydrophile SiOH-Gruppen dominiert. Mit zunehmender Größe der Teilchen steigert sich der hydrophobe Charakter der Teilchen. Ebenso wird die stabilisierende Wirkung von pyrogenem, hydrophoben SiO₂, wie beispielsweise Aerosil 974, 812 und 805 (Degussa) auf Wasser-in-Öl-Emulsionen beschrieben. Der Durchmesser der Primärteilchen sollte dabei zwischen 7 bis 12 nm liegen.

Der vorliegenden Erfindung liegt die Aufgabe zugrunde, aus Teilchen oder Molekülen, die hydrophil oder hydrophil modifiziert sind, und hydrophob oder hydrophob modifizierten Teilchen oder Molekülen, Assoziate oder Agglomerate herzustellen, sie gegebenenfalls zu isolieren und als Emulgatoren für Grenzflächenmodifizierungen, beispielsweise Wasser-in-Öl oder Öl-in-Wasser-Emulsionen einzusetzen. Die genannten Teilchen oder Moleküle sollen dabei über polare Wechselwirkungen oder Wasserstoffbrücken miteinander wechselwirken und diese physikalische Wechselwirkung zu neuen, erfindungsgemäßen Teilchen oder Molekülen führen, die jedoch keine chemische Verknüpfung der Teilmengen der Teilchen oder Moleküle mit hydrophoben oder hydrophilen Domänen aufweisen.

Die vorstehend genannte Aufgabe wird in einer ersten Ausführungsform der Erfindung gelöst durch in Wasser im wesentlichen unlösliche, an ihrer Oberfläche anisotrop verteilte überwiegend hydrophile und überwiegend hydrophobe Domänen aufweisende amphiphile Teilchen oder Moleküle einer Teilchengröße von 1 nm bis 100 *µ*m, bestehend aus antagonistischen Teilmengen von Teilchen oder Molekülen, die jeweils überwiegend hydrophile beziehungsweise überwiegend hydrophobe Domänen aufweisen, wobei die Teilmengen der Teilchen oder Moleküle über polare Wechselwirkungen oder Wasserstoffbrücken agglomeriert oder assoziiert ist.

Erfindungsgemäß wurde gefunden, daß diese Aufgabe zum einen mit Hilfe von Ausgangsteilchen oder Molekülen dadurch gelöst werden kann, die für die Bildung der Assoziate oder Agglomerate verwendet werden, die überwiegend hydrophile Domänen aufweisen, d. h. Bereiche aufweisen, bei denen oberflächliche Hydroxylgruppen oder andere hydrophile Gruppen, wie beispielsweise N-H-Gruppen nicht modifiziert oder zumindest zum Teil mit hydrophilierenden Gruppen modifiziert sind. Die Teilmenge dieser Teilchen weist notwendigerweise kopplungsfähige Gruppen auf, die zur Ausbildung von polaren Wechselwirkungen oder Wasserstoffbrücken geeignet sind.

Für die andere Teilmenge der Teilchen oder Moleküle, die für die erfindungsgemäßen Assoziate oder Agglomerate gebraucht werden, gilt, daß diese hydrophobe Domänen aufweist, d. h. Bereiche aufweisen, die hydrophobe Gruppen von Haus aus enthalten oder durch hydrophobe Gruppen modifiziert sind. Auch diese Teilmenge muß wenigstens in Teilbereichen polare Gruppen aufweisen, die zur Bildung von polaren Wechselwirkungen oder Wasserstoffbrücken geeignet sind. In beiden Fällen kommen hier jeweils Wasserstoffakzeptoren bzw. Donatoren in Frage, die zur Ausbildung von Wasserstoffbrücken besonders geeignet sind.

Wesentliches Kriterium der vorliegenden Erfindung ist, daß die genannten Teilmengen der Teilchen oder Moleküle durch Wasserstoff-Brückenbindungen oder polare Wechselwirkungen in Wechselwirkung treten.

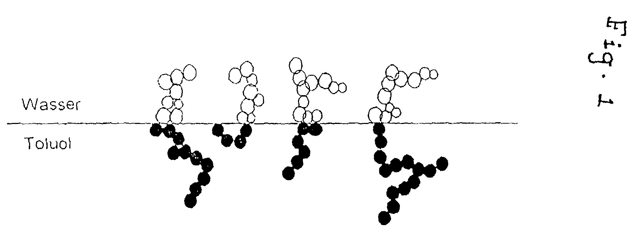

Zur Herstellung der erfindungsgemäßen Teilchen oder Moleküle gibt man beispielsweise die jeweiligen Teilmengen der Teilchen oder Moleküle vorzugsweise an eine Phasengrenzfläche, beispielsweise in ein inertes Lösungsmittelgemisch aus insbesondere Kohlenwasserstoffen, wie Toluol und Wasser und bringt gegebenenfalls unter Einwirkung von Scherkräften beide Teilmengen der Teilchen oder Moleküle miteinander in Kontakt. Hierbei ist zu beachten, daß die Anwesenheit der Phasengrenzfläche nicht zwingend erforderlich ist. Da nicht alle hydrophilen Gruppen an der Oberfläche der Teilchen oder Moleküle modifiziert sind, können die Teilchen wechselwirken mit anderen Teilchen, beispielsweise über polare Wechselwirkungen oder Wasserstoffbrücken. Diese physikalische Wechselwirkung führt zu neuen Assoziaten oder Agglomeraten der erfindungsgemäßen Teilchen oder Moleküle, die auch nach dem Isolieren aus dem Lösungsmittel erhalten bleiben und beispielsweise beim Einsatz als Emulgator zum Tragen kommen oder aber als Suspension direkt eingesetzt werden können. Die Fig. 1 zeigt eine idealisierte Darstellung der erfindungsgemäßen Teilchen oder Moleküle und ihre Ausrichtung an einer Phasengrenzfläche. Die überwiegend hydrophobe Domänen aufweisenden Teile der Moleküle oder Teile richtet sich in die unpolare Toluolphase aus, während sich die überwiegend hydrophilen Domänen aufweisenden Teile der Moleküle oder Teile in die polare Wasserphase ausrichtet.

Die idealisierte Darstellung geht davon aus, daß sich die Wasserstoff-Brückenbindung oder die polare Wechselwirkung insbesondere an der Phasengrenzfläche ausbildet. In der Praxis werden sich jedoch auch in der unpolaren Phase Teilmengen von hydrophile Domänen aufweisenden Bestandteilen finden und umgekehrt.

Mit Hilfe des Methanoltitrations-Tests läßt sich der Erfolg der erfindungsgemäßen Restrukturierung von Teilchen oder Molekül-Clustern ermitteln. Je nach Mischungsverhältnis der Teilmengen der Teilchen oder Moleküle erhält man beispielsweise Produkte, die sich mit einer bestimmten Methanolzahl charakterisieren lassen. Produkte mit Methanolzahl 0-35 eignen sich insbesondere zur Stabilisierung von Öl-in-Wasser-Emulsionen, während sich Produkte mit Methanolzahl 35-60 insbesondere zur Stabilisierung von Wasser-in-Öl-Emulsionen eignen.

Das bedeutet, daß die Oberfläche der erfindungsgemäßen Teilchen oder Moleküle nicht nur hinsichtlich ihrer Affinität gegenüber polaren und unpolaren Lösungsmitteln anisotrop verändert wird, sondern, daß die Teilchen insbesondere an Phasengrenzflächen Wirkungen erzielen, wie sie in ähnlicher Weise von Tensiden bekannt sind. Jedoch sind die erfindungsgemäßen Teilchen oder Moleküle im Gegensatz zu konventionellen Tensiden im System in der Regel unlöslich und können deshalb in einfacher Weise durch Filtrieren, Zentrifugieren oder ähnliche Maßnahmen aus dem System entfernt werden. Hierdurch wird eine neue Klasse von quasigrenzflächenaktiven Produkten zur Verfügung gestellt, welche vielfältige gewerbliche Anwendbarkeit zeigen. Darüber hinaus ist die Herstellung der erfindungsgemäßen Teilchen oder Moleküle sehr viel einfacher und damit kostengünstiger als Teilchen, die gemäß der EP 0 156 270 A2 erhalten werden.

Das Wesen der Erfindung besteht somit darin, daß im Gegensatz zum überwiegenden Stand der Technik die hydrophilen und hydrophoben Domänen auf der Oberfläche der Teilchen oder Moleküle nicht nach statistischen Gesetzen isotrop verteilt sind, sondern die Teilchen oder Moleküle vielmehr voneinander getrennte Bereiche unterschiedlicher Hydrophilie bzw. Hydrophobie aufweisen. Die hydrophilen und hydrophoben Domänen liegen somit in voneinander getrennten Oberflächenbereichen der Teilchen oder Moleküle vor. Dabei können die einzelnen Domänen in einer Fläche angeordnet sein und aneinander angrenzen. Es ist dabei nicht erforderlich, daß die hydrophoben oder hydrophilen Domänen einheitlich ausgeprägt sind. Voraussetzung für die erfindungsgemäßen Teilchen oder Moleküle ist jedoch, daß diese Domänen antagonistischer Natur sind.

Von den löslichen tensidischen Verbindungen ist es bekannt, daß sie, um grenzflächenaktiv zu sein, hydrophile und hydrophobe Gruppen im selben Molekül enthalten müssen. Man kann deshalb das Wesen der Erfindung auch darin sehen, daß die Anordnung der hydrophilen und hydrophoben Domänen aus dem niedermolekularen Bereich der Tenside in den Bereich von Festkörperteilchen einer Größe von etwa 1 nm bis 100 *µ*m übertragen wird. Es ist dabei selbstverständlich, daß die erfindungsgemäßen Teilchen oder Moleküle wenigstens eine hydrophile und eine hydrophobe Domäne aufweisen. Nach oben hin ist jedoch die Zahl der Domänen nicht begrenzt.

Es war überraschend, daß auch diese, verglichen mit dem Niedermolekularbereich, verhältnismäßig groben, unlöslichen Teilchen oder Moleküle in ausgeprägter Form Eigenschaften zeigen, die grenzflächenaktiven Verbindungen eigen sind, wie z.B. die Adsorption an einer (Öl/Wasser)-Phasengrenzfläche.

Die erfindungsgemäßen Teilchen oder Moleküle eignen sich gegebenenfalls in Kombination mit konventionellen Tensiden, die in Hohlräumen oder Käfigen der Teilchen oder Moleküle vorliegen können, unter anderem zur Herstellung verhältnismäßig grober, aber dennoch über Monate stabiler Emulsionen. Sie können zur Stabilisierung von Schäumen verwendet werden. Sie eignen sich zum Einsatz in der Suspensionspolymerisation, in der Enkapsulierung von Verbindungen, wobei es gegebenenfalls vorgesehen sein kann, die Teilchen oder Moleküle mit Fenstern zu versehen, um einen Stoffaustausch der Tenside zu gewährleisten. Die erfindungsgemäßen Teilchen oder Moleküle eignen sich auch für die Entölung von Lagerstätten bei der tertiären Erdölförderung. Dabei ist es dem Fachmann verständlich, daß je nach der Balance der hydrophilen und hydrophoben Domänen die Eigenschaften der erfinduhgsgemäßen Teilchen oder Moleküle in Gemischen von polaren und unpolaren Systemen unterschiedlich sind.

Dieses hydrophile/hydrophobe Gleichgewicht wird bei Tensiden, also löslichen Verbindungen, häufig durch den sogenannten HLB-Wert ausgedrückt.

Wenn auch die erfindungsgemäßen Teilchen oder Moleküle in Wasser und meist auch in organischen Lösungsmitteln unlöslich sind, läßt sich aber doch im Vergleich mit löslichen Tensiden eine gewisse Ähnlichkeit in der Abhängigkeit ihres Verhaltens von ihrer Hydrophil/Hydrophob-Balance feststellen.

Die erfindungsgemäßen Teilchen oder Moleküle können anorganischer oder organischer Natur sein. Bevorzugt sind anorganische Feststoffe, insbesondere Kieselsäure in feinverteilter, beispielsweise pyrogen erzeugter Form. Ebenfalls brauchbar sind die feinteiligen Oxide oder Oxidhydrate des Magnesiums, Calciums, Aluminiums, Yttriums, der Lanthaniden, des Titans, Zirkons und Zinns. Als weiteren Festkörper kann auch Kohlenstoff, z.B. in Form von Ruß, verwendet werden. Als Beispiel für die erfindungsgemäßen Moleküle dienen die im Stand der Technik bekannten Polyalkylsilsesquioxane, die der erfindungsgemäßen Behandlung unterworfen werden. Als organische Verbindungen kommen natürliche oder synthetische Produkte, wie z B. Polysaccharide, insbesondere Stärke und Cellulose, oder organische polymere Verbindungen mit reaktiven Gruppen in Frage. Die auf der Oberfläche der Teilchen befindlichen reaktiven Gruppen sind im Fall der Kieselsäure und der feinteiligen Oxide oder Oxidhydrate die Hydroxylgruppen. Bei der Verwendung von Ruß können oberflächlich vorhandene oder eingeführte Carboxylgruppen oder auch phenolische Hydroxygruppen diese Aufgaben übernehmen. Die reaktiven Gruppen der Polysaccharide sind wiederum Hydroxylgruppen. Bei den organischen polymeren Verbindungen ist man in der Wahl der reaktiven Gruppen relativ frei, da vielerlei Polymerisate bekannt sind, welche Hydroxyl-Carboxyl-,Mercapto- oder andere reaktive Gruppen aufweisen können.

Zur Hydrophilierung und Hydrophobierung der Teilmengen der Teilchen oder Moleküle kann man sich bekannter Techniken bedienen. Wie eingangs bereits geschildert, werden im allgemeinen als hydrophilierende Gruppen Polyoxyethylengruppen verwendet, die die hydrophilen Domänen prägen. Es ist natürlich möglich, einen Teil der Oxyethylengruppen durch Oxypropylengruppen zu ersetzen. Hierdurch kann man die Hydrophilie dieser Polyoxyalkylengruppen abstufen. Jedoch sollten nicht mehr als 50 bis 60 Mol-% der Oxyethylengruppen durch Oxypropylengruppen ersetzt sein, da sonst die Hydrophilie der Polyoxyalkylengruppe zu sehr abgeschwächt wird.

Ebenfalls entsprechend dem Stand der Technik können die hydrophobierenden Gruppen, die die hydrophoben Domänen prägen, Kohlenwasserstoffgruppen sein. Dabei kommen insbesondere Alkylgruppen, Alkylsilylgruppen und vorzugeweise solche mit mehr als 3 Kohlenstoffatomen im Alkylrest in Frage. Es bieten sich insbesondere die von Fettsäuren oder Fettalkoholen mit 10 bis 22 Kohlenstoffatomen abgeleiteten Alkylgruppen an. Man kann statt der Alkylgruppen auch Arylgruppen zur Hydrophobierung verwenden. Die vorgenannten Gruppen können gegebenenfalls substituiert sein. Eine besondere Hydrophobierung und Oleophobierung erzielt man durch den Einbau von perfluorierten Alkylgruppen. Besonders bevorzugt im Sinne der vorliegenden Erfindung ist der Einbau von Alkylsilylgruppen, die ausgewählt sind aus Alkyl-modifizierten Siloxanen, wie Dimethyl-, Trimethyl-, Octyl- oder Dodecylsilan.

Die hydrophilen und hydrophoben Gruppen müssen wenigstens eine reaktive Gruppe aufweisen, über die sie mit der an der Oberfläche der zu Ausgangs-Teilchen oder Moleküle befindlichen reaktiven Gruppe gebunden sind. Die hydrophilen und/oder hydrophoben Gruppen sind mit der jeweiligen Matrix beispielsweise durch eine
-CO-, -SiO-, 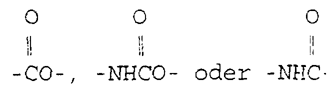 Brücke verbunden. Es sind auch andere Brückenglieder möglich. Dies ist auch für die vorliegende Erfindung nicht von ausschlaggebender Bedeutung, denn das Wesen der Erfindung besteht weniger in der Auswahl der hydrophilierenden und hydrophobierenden Gruppen und der Art ihrer Verbindung mit der Matrix der Teilchen oder Moleküle als vielmehr in der räumlichen Verteilung der Domänen.

Ein weiterer Gegenstand der Erfindung sind die Verfahren zur Herstellung der Teilchen oder Moleküle, wobei man eine Teilmenge von Teilchen oder Moleküle in an sich bekannter Weise partiell hydrophiliert und eine weitere Teilmenge von Teilchen oder Moleküle in an sich bekannter Weise partiell hydrophobiert und die resultierende Menge der Teilchen oder Moleküle, gegebenenfalls an einer Phasengrenzfläche, beispielsweise unter Einwirkung von Scherkräften in Kontakt bringt. Alternativ ist es selbstverständlich möglich, entsprechende Teilchen oder Molküle, die im Handel erhältlich sind, direkt umzusetzen. Bei der Einwirkung von Scherkräften auf modifizierte Kieselsäuren, insbesondere an Phasengrenzflächen werden neue Agglomerate oder Assoziate gebildet, bei denen die Teilchen oder Moleküle, die jeweils hydrophile beziehungsweise hydrophobe Domänen aufweisen, über polare Wechselwirkungen oder Wasserstoffbrücken agglomeriert oder assoziiert werden. Die genannten Scherkräfte können beispielsweise durch den Einsatz von Rührern nach dem Rotor-Stator-Prinzip aber beispielsweise auch durch die Einwirkung von Ultraschall realisiert werden. Im Allgemeinen wird erfindungsgemäß erreicht, daß die überwiegend hydrophoben Domänen aufweisende Teilmenge der Ausgangsteilchen noch hydrophile Gruppen wie OH- oder NH-Gruppen enthalten, deren Dichte gegebenenfalls durch an sich bekannte Verfahren erhöht werden kann, um mit der anderen Teilmenge, die ebenfalls polare Gruppen aufweist, die gewünschten Wechselwirkungen einzugehen. Durch Einwirkung von Scherkräften auf Kieselsäuren werden aus den vorhandenen Clustern, die meist eine Größenordnung von 0,5 bis 1 *µ*m aufweisen, Primärteilchen einer Größenordnung von 5 bis 15 nm freigesetzt, die sich dann mit Hilfe der vorliegenden Erfindung reorganisieren.

Das Herstellungsverfahren läßt sich an einem Beispiel besser verdeutlichen:

Man verwendet z.B. als Festkörperteilchen pyrogen erzeugte Kieselsäure und hydrophiliert gemäß des Standes der Technik eine Teilmenge dieser Kieselsäure mit einem Polyoxyalkylengruppen enthaltenden Silan, wie es z.B. durch die Formel

R²O(C₂H₄O)ₙ-R⁴-Si(R³)₃₋ₐ (OR¹)ₐ

beschrieben wird. Die zweite Teilmenge der Kieselsäure wird ebenfalls dem Stand der Technik entsprechend durch partielle Umsetzung der Hydroxylgruppen hydrophobiert.

Es liegen nun zwei Teilmengen der Kieselsäure vor: Die eine Teilmenge trägt hydrophile Domänen. Die zweite Teilmenge trägt hydrophobe Domänen. Diese bringt man erfindungsgemäß beispielsweise an einer Phasengrenzfläche bevorzugt Wasser/organische Verbindung miteinander in Kontakt. Die Größe der Phasengrenzfläche sollte dabei so groß wie möglich sein, da die Reorganisation der Teilchen bevorzugt hier stattfinden soll.

In analoger Weise kann man auch feinteiliges Aluminiumoxidhydrat oder feinteilige getrocknete Stärke, z.B. Quellstärke, jeweils hydrophobierend behandeln. Durch die Teilchengröße, aber vor allem durch Variation der hydrophoben Substituenten hinsichtlich ihrer Struktur und ihres Molekulargewichtes und hinsichtlich ihrer aufgebrachten Menge lassen sich die Eigenschaften der hergestellten Teilchen oder Moleküle bestimmen und den jeweiligen, durch die beabsichtigte Anwendung bedingten Anforderungen anpassen. So ist es beispielsweise leicht möglich, Teilmengen pyrogener Kieselsäure mit unterschiedlichen Mengen eines hydrophilen Silans und eines hydrophoben Silans zu behandeln und dadurch Produkte herzustellen, die sich hinsichtlich ihrer Dispergierbarkeit in polaren und unpolaren Lösungsmitteln deutlich unterscheiden.

Die Stabilitäten der Dispensionen in unterschiedlichen Lösungsmitteln, wie beispielsweise Öl/Wasser, Ethanol und Toluol, erlauben eine deutliche Differenzierung von Produkten und ermöglichen, diese hinsichtlich ihrer Hydrophobie bzw. Hydrophilie einzuordnen. Produkte, die sich in ihren Dispersionsstabilitäten unterscheiden, sind auch deutlich verschieden in ihrer Wirksamkeit in bestimmten Anwendungen, wie beispielsweise der Entölung ölgesättigter Sandpackungen.

Die erfindungsgemäßen Teilchen oder Moleküle zeigen ausgeprägte Wirksamkeit an Phasengrenzflächen. Sie können z.B. bei geeigneter Wahl ihrer hydrophoben und hydrophilen Domänen als Emulgatoren verwendet werden. Mit Hilfe derartiger Teilchen ist es beispielsweise möglich, grobteilige Emulsionen herzustellen, die trotz ihrer großen Tröpfchen bemerkenswert stabil gegenüber Koaleszenz sind. Dabei ergibt sich eine weitere wesentliche Eigenschaft der erfindungsgemäßen Teilchen oder Moleküle daraus, daß sie meist in einfacher Weise, z.B. durch Filtration, aus dem emulgierten System entfernt werden können, wobei die Emulsion bricht. Die Anwendungsgebiete entsprechen wenigstens der Lehre der EP 0 156 270 A2. Die Teilchen oder Moleküle lassen sich dem gewünschten Anwendungszweck maßgeschneidert anpassen.

Durch entsprechende Anpassung der hydrophoben und hydrophilen Domänen können die erfindungsgemäßen Teilchen oder Moleküle aber auch als Emulsionsspalter wirksam werden. Es ist vorteilhaft, die Teilchen oder Moleküle vor der Anwendung in einem Lösungs-/Dispergier-Mittel fein zu verteilen. Besonders vorteilhaft ist es, die erfindungsgemäßen Teilchen oder Moleküle zusammen mit an sich bekannten Dismulgatoren einzusetzen. Hier ist häufig ein Synergismus zu beobachten.

Die erfindungsgemäßen Teilchen oder Moleküle können auch bei der Bildung und Stabilisierung wäßriger Schäume zu einer Wirkungsverbesserung an sich bekannter Tenside beitragen.

Weiterhin lassen sich die erfindungsgemäßen Festkörper mit besonderem Vorteil bei der tertiären Erdölförderung verwenden.

Sie können insbesondere bei Flutungsverfahren der Tensidlösung zugesetzt werden und führen zu einer erhöhten Entölung.

In den folgenden Beispielen wird die Herstellung verschiedener Teilchen entsprechend der Erfindung gezeigt. Es werden außerdem noch die grenzflächenwirksamen Eigenschaften dieser Produkte und ihre Anwendbarkeit beschrieben.

### Beispiel 1 :

2 g einer pyrogenen Kieselsäure mit 12 nm Primärteilchengröße und hydrophober Modifizierung (Methanol zahl 40) und 2 g einer unbehandelten, hydrophilen Kieselsäure mit 12 nm Primärteilchengröße (Methanolzahl 0) wurden in 50 ml Toluol dispergiert. Mit einem Ultraturrax® T25 wurde die Mischung dann 15 min bei 8000 Upm geschert. Danach ließ man die Dispersion 1 - 2 h ruhen und filtrierte über einen Faltenfilter die Partikel ab. Anschließend trocknete man im Vakuumtrockenschrank bei 100 °C. Die Methanolzahl lag im Bereich 20 - 25.

### Beispiel 2:

4 g einer pyrogenen Kieselsäure mit 12 nm Primärteilchengröße und hydrophober Modifizierung (Methanolzahl 40) und 6 g einer unbehandelten, hydrophilen Kieselsäure mit 12 nm Primärteilchengröße (Methanolzahl 0) wurden in 300 ml Toluol dispergiert. Mit einem Ultraturrax® T25 wurde die Mischung dann 15 min bei 8000 Upm geschert. Danach ließ man die Dispersion 1 - 2 h ruhen und filtrierte über einen Faltenfilter die Partikel ab. Anschließend trocknete man im Vakuumtrockenschrank bei 100 °C. Die Methanolzahl lag im Bereich 10 - 14.

### Beispiel 3:

10 g einer pyrogenen Kieselsäure mit 12 nm Primärteilchengröße und hydrophober Modifizierung, die nach dem in der DE 34 11 759 A beschriebenen Verfahren erfolgte (Methanolzahl 40), wurde in 300 ml Toluol dispergiert und mit 10 g einer unbehandelten, hydrophilen Kieselsäure mit 12 nm Primärteilchengröße (Methanolzahl 0), die in 200 ml Wasser dispergiert vorlag, versetzt. Mit einem Ultraturrax® T25 wurde die Mischung dann 15 min bei 8000 Upm geschert. Danach ließ man die Emulsion ruhen, filtrierte die überstehenden Flüssigkeiten ab und trocknete anschließend im Vakuumtrockenschrank bei 100 °C. Die Methanolzahl lag im Bereich 20 - 25.

### Beispiel 4:

10 g einer pyrogenen Kieselsäure mit 12 nm Primärteilchengröße und hydrophober Modifizierung, die nach dem in der DE 34 11 759 A beschriebenen Verfahren erfolgte (Methanolzahl 40), wurde in 300 ml Toluol dispergiert und mit 15 g einer unbehandelten, hydrophilen Kieselsäure mit 12 nm Primärteilchengröße (Methanolzahl 0), die in 200 ml Wasser dispergiert vorlag, versetzt. Mit einem Ultraturrax® T25 wurde die Mischung dann 15 min bei 8000 Upm geschert. Danach ließ man die Emulsion ruhen, filtrierte die überstehenden Flüssigkeiten ab und trocknete anschließend im Vakuumtrockenschrank bei 100 °C. Die Methanolzahl lag im Bereich 10 - 14.

### Beispiel 5:

10 g einer pyrogenen Kieselsäure mit 12 nm Primärteilchengröße und hydrophober Modifizierung, die nach dem in der DE 34 11 759 A offenbarten Verfahren erfolgte (Methanolzahl 50), wurde in 300 ml Toluol dispergiert und mit 2 g einer mit CH₃O(C₂H₄O)₈-Si(OCH₃)₃ modifizierten, hydrophilierten Kieselsäure mit 12 nm Primärteilchengröße (Methanolzahl 0), die in 100 ml Wasser dispergiert vorlagen, versetzt. Mit einem Utracurrax® T25 wurde die Mischung dann 15 min bei 8000 Upm geschert. Danach ließ man die Emulsion ruhen und filtrierte die überstehenden Flüssigkeiten ab. Anschließend trocknete man im Vakuumtrockenschrank bei 50 °C. Die Methanolzahl lag im Bereich 25 - 30.

### Beispiel 6:

10 g einer pyrogenen Kieselsäure mit 12 nm Primärteilchengröße und hydrophober Modifizierung, die nach dem in der DE 34 11 759 A offenbarten Verfahren erfolgte (Methanolzahl 50), wurde in 300 ml Toluol dispergiert und mit 2 g einer mit CH₃O(C₂H₄O)ₙ(C₃H₇O)ₘ-Si(OR¹)₃ modifizierten, hydrophilierten Kieselsäure mit 12 nm Primärteilchengröße, wobei n = 12 und m = 13 bedeutete (Methanolzahl 0), die in 100 ml Wasser dispergiert vorlagen, versetzt. Mit einem Ultraturrax® T25 wurde die Mischung dann 15 min bei 8000 Upm geschert. Danach ließ man die Emulsion ruhen und trocknete im Vakuumtrockenschrank bei 50°C. Die Methanolzahl lag im Bereich von 30 - 35.

### Beispiel 7:

10 g einer pyrogenen Kieselsäure mit 12 nm Primärteilchengröße und hydrophober Modifizierung, die nach dem in der DE 34 11 759 A offenbarten Verfahren erfolgte (Methanolzahl 40), wurde in 300 ml Toluol dispergiert und mit 10 g einer mit CH₃O(C₂H₄O)₈Si(OCH₃)₂ modifizierten, hydrophilierten Kieselsäure mit 12 nm Primärteilchengröße (Methanolzahl 0), die in 100 ml Wasser dispergiert vorlagen, versetzt. Mit einem Ultraturrax® T25 wurde die Mischung dann 15 min bei 8000 Upm geschert. Danach ließ man die Emulsion ruhen und trocknete im Vakuumtrockenschrank bei 50°C. Die Methanolzahl war 0, d. h. das Material wurde von Wasser vollständig benetzt.

### Beispiel 8:

10 g einer pyrogenen Kieselsäure mit 12 nm Primärteilchengröße und hydrophober Modifizierung, die nach dem in der DE 34 11 759 A offenbarten Verfahren erfolgte (Methanolzahl 40), wurde in 300 ml Toluol dispergiert und mit 2 g einer mit CH₃O(C₂H₄O)ₙ(C₃H₇O)ₘ-Si(OR¹)₃ modifizierten, hydrophilierten Kieselsäure mit 12 nm Primärteilchengröße, wobei n = 12 und m = 13 bedeutete (Methanolzahl 0), die in 100 ml Wasser dispergiert vorlagen, versetzt. Mit einem Ultraturrax® T25 wurde die Mischung dann 15 min bei 8000 Upm geschert. Danach ließ man die Emulsion ruhen und filtrierte die Flüssigkeit ab. Anschließend trocknete man im Vakuumtrockenschrank bei 50°C. Die Methanolzahl war 0, d. h. das Material wurde von Wasser vollständig benetzt.

### Beispiel 9:

10 g eines Rußes (Methanolzahl 50) wurden in 200 ml Toluol dispergiert und mit 10 g einer unbehandelten, hydropilen Kieselsäure mit 12 nm Primärteilchengröße (Methanolzahl 0), die in 200 ml Wasser dispergiert vorlag, versetzt, Mit einem Ultraturrax® T25 wurde die Mischung dann 15 min bei 8000 Upm geschert. Danach ließ man die Emulsion ruhen, filtrierte die überstehenden Flüssigkeiten ab und trocknete anschließend im Vakuumschrank bei 100 °C. Die Methanolzahl lag im Bereich 30 - 40.

Anwendung der Produkte in Emulsionen:
Je nach Mischung der hydrophilen und hydrophoben Teilchen ergab siche eine Benetzbarkeit, die sich im Methanoltest niederschlug. Teilchenmischungen mit MeOH-Zahl zwischen O und 35 stabilisierten bevorzugt Öl-in-Wasser-Emulsionen, während solche mit MeOH-Zahl zwischen 35 und 60 Wasser-in-Öl-Emulsionen stabilisierten.

### Beispiel 10:

2 g des Produkts aus Beispiel 1 wurden in 50 g Wasser gegeben und mit 50 ml dünnflüssigem Paraffin überschichtet. Mit einem Ultraturrax T 25 rührte man daraus eine Emulsion und schüttete diese in einen 100 ml Standzylinder zur Bestimmung der Emulsionsmenge. Es bildeten sich 80 ml einer W/O-Emulsion; deren disperse Phase aufgrund von Dichtedifferenzen an der Oberfläche sedimentieren. Es wurde keine Separation von Öl beobachtet.

### Beispiel 11 :

2 g des Produktes aus Beispiel 4 wurden in 50 g Wasser gegeben und mit 50 ml dünnflüssigem Paraffin überschichtet. Mit einem Ulraturrax® T25 rührte man daraus eine Emulsion und schüttete diese in einem 100 ml Standzylinder zur Bestimmung der Emulsionsmenge. Es bildete sich eine stabile O/W-Emulsion. Es wurde keine Separation von Öl beobachtet.

Anwendung der Produkte in Polyurethanschaumformulierungen:

### Beispiel 12:

Die Produkte wurden in folgende PU-Formulierung eingerührt und verschäumt:
Rührertyp: H-Trieb mit Relais-Schaltung zur Überwachung von Rührzeit und Rührgeschwindigkeit.
Rührbedingungen: Vorrührphase mit 1 min bei 1000 Upm, wobei alle Stoffe bis auf Diisocyanat gerührt wurden. Dann Hauptrührphase mit 7 s bei 2500 Upm und Diisocyanatzusatz.
Rührerdesign: Tellerrührer mit 5,8 cm Durchmesser des Tellers und 8 halbmondförmigen, gleichen Vertiefungen mit 1 cm Durchmesser, regelmäßig im Teller verteilt, nach unten gerichtet.

| | |
|---|---|
| Polyol | 400 g |
| Wasser | 16 g |
| DMEA | 0,8 g |
| K29 | 0,8 g |
| T80 | 194,4 g |
| Tegostab® BF 2370 | 1,6 g |
| Produkt | 1 Gew.-% bezogen auf Polyol |
| | |
| dabei bedeuten | Polyol: Triol, Molgewicht 3500 |
| | DMEA: Dimethylethanolamin |
| | K29: Zinn(II)octoat |
| | T80: Toluylendiisocyanat (80 % 2,4 TDI, |
| | 20 % 2,6 TDI) |

| | Herstellung | Rückfall | |
|---|---|---|---|
| Kieselsäure A200 | trocken | Kollaps | 1 Gew.-% eingesetzt |
| Kieselsäure A202 | trocken | 9,7 cm | 1 Gew.-% eingesetzt |
| HDK 2000 | trocken | Kollaps | 1 Gew.-% eingesetzt |
| | | | |
| Produkt aus Beispiel 1 | Toluol | 3,5 | 2 Gew.-% eingesetzt |
| Produkt aus Beispiel 2 | Toluol | 3,4 | 2 Gew.-% eingesetzt |
| Produkt aus Beispiel 3 | Toluol/Wasser | 1,8 | 2 Gew.-% eingesetzt |
| Produkt aus Beispiel 4 | Toluol/Wasser | 2,2 | 2 Gew.-% eingesetzt |
| Kieselsäure Typ A200/A972 50/50-Gemisch | trocken gerührt | 3,9 | 2 Gew.-% eingesetzt |
| Kieselsäure Typ A200/A972 60/40-Gemisch | trocken gerührt | 5,1 | 2 Gew.-% eingesetzt |
| Blindwerte (ohne Zusatz) | | 2,7 | |

Die Produkte wurden hinsichtlich ihrer stabilisierenden Wirkung in dieser grenzstabilen Formulierung getestet. Es zeigte sich deutlich ein stabilisierender Einfluß der erfindungsgemäßen Teilchen, die an der Grenzfläche von Wasser/Toluol gewonnen wurden, der sich im geringeren Rückfall des Schaumes manifestierte.

## Patentansprüche

1. In Wasser im wesentlichen unlösliche, an ihrer Oberfläche anisotrop verteilte überwiegend hydrophile und überwiegend hydrophobe Domänen aufweisende amphiphile Teilchen oder Moleküle einer Teilchengröße von 1 nm bis 100 *µ*m, bestehend aus antagonistischen Teilmengen von Teilchen oder Molekülen, die jeweils überwiegend hydrophile beziehungsweise überwiegend hydrophobe Domänen aufweisen, wobei die Teilmengen der Teilchen oder Moleküle über polare Wechselwirkungen oder Wasserstoffbrücken agglomeriert oder assoziiert ist.

2. Teilchen nach Anspruch 1, **dadurch gekennzeichnet, daß** die Teilmengen jeweils aus überwiegend hydrophil und überwiegend hydrophob modifizierten Kieselsäuren bestehen.

3. Teilchen nach Anspruch 1, **dadurch gekennzeichnet, daß** die Teilmengen jeweils aus Polyalkylsilsesquioxanen, insbesondere Polymethylsilsesquioxanen bestehen.

4. Teilchen nach Anspruch 1, **dadurch gekennzeichnet, daß** die hydrophilen Teilmengen aus Kieselsäuren und die hydrophoben Teilmengen aus Polyalkylsilsesquioxanen bestehen.

5. Teilchen oder Moleküle nach Anspruch 1, **dadurch gekennzeichnet, daß** die hydrophilen Teilmengen aus Stärke oder anderen Kohlenhydraten bestehen.

6. Teilchen oder Moleküle nach Anspruch 1, **dadurch gekennzeichnet, daß** die hydrophoben Domänen durch Kohlenwasserstoffgruppen geprägt sind.

7. Teilchen oder Moleküle nach Anspruch 6, **dadurch gekennzeichnet, daß** die Kohlenwasserstoffgruppen Alkyl- oder Arylgruppen, die jeweils substituiert sein können, umfassen.

8. Teilchen oder Moleküle nach Anspruch 1, **dadurch gekennzeichnet, daß** die hydrophoben Domänen durch siliciumorganische Verbindungen mit den Struktureinheiten R⁶ und ≡SiOR¹ geprägt sind, wobei R⁶ ein Alkylrest mit mehr als 3 Kohlenstoffatomen, ein Aryl- oder Alkarylrest oder ein Polysiloxanylrest ist.

9. Teilchen oder Moleküle nach Anspruch 8, **dadurch gekennzeichnet, daß** die siliciumorganische Verbindungen Silane der Formel
R⁷ _{c}R² _{d}Si(OR¹)_{4-(c+d)}
wobei R⁷ ein Alkylrest mit mehr als 3 Kohlenstoffatomen, ein Aryl- oder Alkarylrest, c = 1 oder 2, d = 0 oder 1, c + d = 1 , 2 oder 3 bedeuten, oder Organopolysiloxane mit mindestens einer Gruppe -OR¹ umfassen.

10. Teilchen oder Moleküle nach Anspruch 1, **dadurch gekennzeichnet, daß** die hydrophoben Domänen durch Verbindungen der Formel
R⁷COCl
geprägt sind.

11. Teilchen oder Moleküle nach einem der vorhergehenden Ansprüche, **dadurch gekennzeichnet, daß** die hydrophilen und/oder hydrophoben Gruppen mit der Teilchenmatrix durch eine
-CO-, -SiO-, 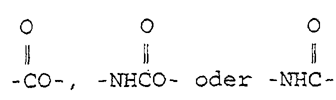 Brücke
verbunden sind.

12. Verfahren zur Herstellung von Teilchen oder Molekülen nach einem oder mehreren der Ansprüche 1 bis 11, **dadurch gekennzeichnet, daß** man antagonistische Teilmengen von Teilchen oder Molekülen, die jeweils hydrophile beziehungsweise hydrophobe Domänen aufweisen, gegebenenfalls an. einer Phasengrenzfläche miteinander in Kontakt bringt.

13. Verfahren nach Anspruch 12, **dadurch gekennzeichnet, daß** man die Reaktion an einer Phasengrenzfläche aus Wasser und einem organischen Lösungs-/Dispergiermittel, insbesondere einem aliphatischen oder aromatischen Kohlenwasserstoff durchführt.

14. Verfahren nach einem der Ansprüche 12 oder 13, **dadurch gekennzeichnet, daß** man Kieselsäuren durch Einwirkung von Scherkräften miteinander in Kontakt bringt.

15. Verfahren nach Anspruch 14, **dadurch gekennzeichnet, daß** man die Scherkräfte durch Rührer nach dem Rotor-Stator-Prinzip einsetzt.

16. Verwendung der Teilchen nach den vorhergehenden Ansprüchen 1-11 als grenzflächenaktive Produkte, insbesondere zum Stabilisieren oder Destabilisieren von Emulsionen und Schäumen, in der Suspensionspolymerisation, zur Enkapsulierung sowie zur tertiären Erdölförderung.

## Claims

1. Substantially water-insoluble, amphiphilic particles or molecules with predominantly hydrophilic and predominantly hydrophobic domains distributed anisotropically on their surface having particle sizes from 1 nm to 100 µm consisting of antagonistic partial quantities of particles or molecules each having predominantly hydrophilic or predominantly hydrophobic domains, wherein the partial quantities of said particles or molecules are agglomerated or associated by polar interactions or hydrogen bonds.

2. The particles according to claim 1, **characterized in that** the partial quantities each consist of predominantly hydrophilically and predominantly hydrophobically modified silicic acids.

3. The particles according to claim 1, **characterized in that** the partial quantities each consist of polyalkylsilsesquioxanes, in particular polymethylsilsesquioxanes.

4. The particles according to claim 1, **characterized in that** the hydrophilic partial quantities consist of silicic acids and the hydrophobic partial quantities consist of polyalkylsilsesquioxanes.

5. The particles or molecules according to claim 1, **characterized in that** the hydrophobic partial quantities consist of starch or other carbohydrates.

6. The particles or molecules according to claim 1, **characterized in that** the hydrophobic domains are predominated by hydrocarbon groups.

7. The particles or molecules according to claim 6, **characterized in that** the hydrocarbon groups comprise alkyl or aryl groups which may be substituted each.

8. The particles of molecules according to claim 1, **characterized in that** the hydrophobic domains are predominated by organosilicon compounds with the moieties R⁶ and ≡SiOR¹, wherein R⁶ is an alkyl moiety having more than 3 carbon atoms, an aryl or alkaryl moiety or a polysiloxane moiety.

9. The particles or molecules according to claim 8, **characterized in that** the organosilicon compounds comprise silanes of the formula
R⁷ _{c}R² _{d}Si(OR¹)_{4-(c+d)},
wherein R⁷ is an alkyl moiety with more than 3 carbon atoms, an aryl or alkaryl moiety, c = 1 or 2, d = 0 or 1, c + d = 1, 2, or 3 or organopolysiloxanes with at least one group -OR¹.

10. The particles or molecules according to claim 1, **characterized in that** the hydrophobic domains are predominated by compounds of the formula
R⁷COCl.

11. The particles or molecules according to any one of the preceding claims, **characterized in that** the hydrophilic and/or hydrophobic groups are connected to the particle matrix by a
-CO-, -SiO-, 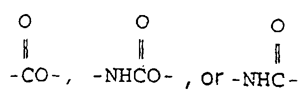 bridge.

12. A process for preparing particles or molecules according to one or several of claims 1 to 11, **characterized in that** antagonistic partial quantities of particles or molecules each having hydrophilic or hydrophobic domains are contacted with each other, optionally at a boundary surface.

13. The process according to claim 12, **characterized in that** the reaction is performed at the boundary surface of water and an organic solvent/dispersant, in particular an aliphatic or aromatic hydrocarbon.

14. The process according to one of claims 12 or 13, **characterized in that** silicic acids are contacted under the influence of shear forces.

15. The process according to claim 14, **characterized in that** said shear forces are generated by agitators using the rotor stator principle.

16. Use of the particles according to any one of the preceding claims 1 to 11 as surface-active products, in particular for stabilizing or destabilizing emulsions and foams, in the suspension polymerization, for the encapsulation and the tertiary oil recovery.

## Revendications

1. Particules ou molécules amphiphiles, sensiblement insoluble dans l'eau, présentant des domaines principalement hydrophiles et des domaines principalement hydrophobes répartis d'une manière anisotrope sur leur surface, ayant une granulométrie de 1 nm à 100 *µ*m, constituées de parties antagonistes de particules ou de molécules, qui comportent respectivement des domaines principalement hydrophiles et des domaines principalement hydrophobes, les parties des particules ou des molécules étant agglomérées ou associées par l'intermédiaire d'interactions polaires ou de liaisons hydrogène.

2. Particules selon la revendication 1, **caractérisées en ce que** les parties sont constituées respectivement de silices ayant subi une modification principalement hydrophile et de silices ayant subi une modification principalement hydrophobe.

3. Particules selon la revendication 1, **caractérisées en ce que** les parties sont constituées respectivement de polyalkylsilsesquioxanes, en particulier de polyméthylsilsesquioxanes.

4. Particules selon la revendication 1, **caractérisées en ce que** les parties hydrophiles sont constituées de silices, et les parties hydrophobes de polyalkylsilsesquioxanes.

5. Particules ou molécules selon la revendication 1, **caractérisées en ce que** les parties hydrophiles sont constituées d'amidon ou d'autres hydrates de carbone.

6. Particules ou molécules selon la revendication 1, **caractérisées en ce que** les domaines hydrophobes sont marqués par des groupes hydrocarbonés.

7. Particules ou molécules selon la revendication 6, **caractérisées en ce que** les groupes hydrocarbonés comprennent des groupes alkyle ou aryle dont chacun peut être substitué.

8. Particules ou molécules selon la revendication 1, **caractérisées en ce que** les domaines hydrophobes sont marqués par des composés organiques du silicium comportant des motifs structuraux R⁶ et ≡SiOR¹, où R⁶ est un reste alkyle ayant plus de 3 atomes de carbone, un reste aryle ou alkaryle, ou un reste polysiloxanyle.

9. Particules ou molécules selon la revendication 8, **caractérisées en ce que** les composés organiques du silicium comprennent des silanes de formule
R⁷ _{c}R² _{d}Si(OR¹)_{4-(c+d)}
dans laquelle R⁷ est un reste alkyle ayant plus de 3 atomes de carbone, un reste aryle ou alkaryle, c = 1 ou 2, d = 0 ou 1, c+d = 1, 2 ou 3, ou encore des organopolysiloxanes ayant au moins un groupe -OR¹.

10. Particules ou molécules selon la revendication 1, **caractérisées en ce que** les domaines hydrophobes sont marqués par des composés de formule R⁷COCl.

11. Particules ou molécules selon l'une des revendications précédentes, **caractérisées en ce que** les groupes hydrophiles et/ou hydrophobes sont liés à la matrice des particules par un pont
-CO-, -SiO-,

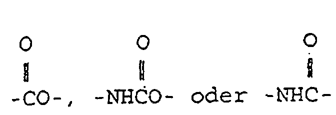

12. Procédé de préparation de particules ou molécules selon l'une ou plusieurs des revendications 1 à 11, **caractérisé en ce que** l'on met en contact les unes avec les autres des parties antagonistes de particules ou molécules qui comportent respectivement des domaines hydrophiles et hydrophobes, éventuellement au niveau d'une interface entre phases.

13. Procédé selon la revendication 12, **caractérisé en ce qu'**on met en oeuvre la réaction au niveau d'une interface entre une phase eau et une phase solvant/dispersant organique, en particulier un hydrocarbure aliphatique ou aromatique.

14. Procédé selon l'une des revendications 12 et 13, **caractérisé en ce qu'**on met en contact des silices l'une avec l'autre sous l'action de forces de cisaillement.

15. Procédé selon la revendication 14, **caractérisé en ce que** les forces de cisaillement sont appliquées à l'aide d'un agitateur basé sur le principe rotor-stator.

16. Utilisation des particules selon les revendications 1 à 11 ci-dessus en tant que produits à activité inter-faciale, en particulier pour stabiliser ou déstabiliser des émulsions et des mousses, lors de la polymérisation en suspension, pour l'encapsulage, et pour l'extraction tertiaire de pétrole.
